Europäisches Patentamt

European Patent Office

Office européen des brevets

(11) Numéro de publication : **0 481 839 A1**

# (12) DEMANDE DE BREVET EUROPEEN

(21) Numéro de dépôt : **91402622.4**

(22) Date de dépôt : **01.10.91**

(51) Int. Cl.[5] : **C21D 1/76**

(30) Priorité : **18.10.90 FR 9012874**

(43) Date de publication de la demande :
**22.04.92 Bulletin 92/17**

(84) Etats contractants désignés :
**BE CH DE ES FR GB IT LI NL SE**

(71) Demandeur : **L'AIR LIQUIDE, SOCIETE ANONYME POUR L'ETUDE ET L'EXPLOITATION DES PROCEDES GEORGES CLAUDE**
**75, Quai d'Orsay**
**F-75321 Paris Cédex 07 (FR)**

(72) Inventeur : **Claverie, Pierre**
**18/20, rue de Sèvres**
**F-92100 Boulogne Billancourt (FR)**
Inventeur : **Duchateau, Eric**
**28, rue Borgnis Desbordes**
**F-78000 Versailles (FR)**
Inventeur : **Karinthi, Pierre**
**66, rue Anatole France**
**F-78350 Jouy-en-Josas (FR)**
Inventeur : **Queille, Philippe**
**7, rue Rieussec**
**F-78220 Viroflay (FR)**

(74) Mandataire : **Le Moenner, Gabriel et al**
**L'AIR LIQUIDE, Société Anonyme pour l'étude et l'exploitation des procédés Georges Claude**
**75, Quai d'Orsay**
**F-75321 Paris Cédex 07 (FR)**

(54) **Procédé d'élaboration d'une atmosphère contrôlée pour traitement thermique de métaux.**

(57)   On élimine sensiblement tout gaz oxydant résiduel dans une enceinte de traitement, neutre ou réductrice, par injection dans cette dernière d'un hydrure de silicium à l'état gazeux, à une température comprise entre 50 et 1600°C et à une teneur telle que le rapport R de la teneur d'hydrure à la teneur de gaz oxydant à éliminer est comprise entre 1,5 et 20. La rapidité d'action des traces d'hydrure injecté permet de piloter avec précision le procédé de traitement thermique en maintenant les teneurs résiduelles en gaz oxydant au-dessous de seuils déterminés très faibles.

EP 0 481 839 A1

La présente invention concerne l'élaboration d'une atmosphère contrôlée pour traitement thermique de métaux dans au moins une enceinte ou un four de traitement, l'atmosphère étant constituée essentiellement de gaz neutres ou réducteurs, purs ou en mélanges, et, plus particulièrement, un procédé d'élaboration d'une atmosphère contrôlée sensiblement exempte de gaz oxydants.

La présente invention s'applique à l'élaboration d'atmosphères contrôlées de protection sous températures adaptées à des traitements thermiques, tels que recuit, chauffage après trempe, frittage, brasage, à des opérations de revêtement par dépôt au trempé, telles la galvanisation, l'aluminiage, à l'élaboration de métaux très sensibles à l'oxydation, comme le titane, le zirconium, les alliages aluminium-lithium, ou encore à des opérations de co-frittage de céramiques multi-couches et de métaux, ou de liaisons métal-céramique. Ces atmosphères contrôlées sont utilisées avec des pressions très variables allant de $10^{-3}$ Pa à $10^8$ Pa absolus en fonction du type d'enceintes employées pour le traitement. Les atmosphères contrôlées sont généralement élaborées à partir de gaz industriels ou de gaz de générateurs exothermiques ou endothermiques et sont typiquement constituées majoritairement de gaz neutres, tels que l'azote, l'argon ou l'hélium, et/ou de gaz réducteurs, tels que l'hydrogène ou le monoxyde de carbone, soit purs, soit en mélanges. Pour former l'atmosphère contrôlée dans l'enceinte, ces gaz sont injectés dans l'enceinte avec un débit suffisant pour minimiser la teneur résiduelle de gaz oxydants, tels que la vapeur d'eau, le dioxyde de carbone et/ou l'oxygène. Pour éviter l'oxydation et, partant, des modifications de la composition chimique des produits traités ou élaborés sous ces atmosphères contrôlées, il est nécessaire que ces dernières soient neutres, éventuellement réductrices vis-à-vis du métal considéré ou suffisamment faiblement oxydantes pour éviter qu'une oxydation significative se développe au cours du traitement. Toutefois, des traces oxydantes, telles que $H_2O$, $O_2$, demeurent présentes dans l'atmosphère contrôlée, en raison de microfuites dans les systèmes de canalisations des gaz ou dans l'enceinte de traitement, de chargements discontinus ou continus des matériaux ou pièces dans l'enceinte de traitement, entraînant des entrées d'air néfastes pour l'atmosphère contrôlée en termes de qualité, de mauvaises manipulations du système de gaz, de l'état de surface des pièces à traiter ou de dégazage de ces dernières lors de leur montée en température.

La présente invention a pour objet l'élaboration d'une atmosphère contrôlée du type défini ci-dessus, suivant un procédé simple à mettre en oeuvre, efficace, garantissant des teneurs résiduelles très faibles en impuretés oxydantes, offrant une grande flexibilité d'utilisation et n'augmentant pas de façon significative les coûts de production.

Pour ce faire, selon une caractéristique de l'invention, on injecte dans l'enceinte de traitement un hydrure de silicium à l'état gazeux à une teneur, dans l'atmosphère de traitement, telle que le rapport R de la teneur d'hydrure de silicium à la teneur du gaz oxydant à éliminer est compris initialement, à l'instant de l'injection, dans les conditions de pression et de température du traitement considéré et selon la géométrie de l'enceinte, entre 1,5 et 20, typiquement entre 2 et 10, plus particulièrement entre 2 et 4. La teneur maximum en hydrure ne dépasse pas 30 000 ppm, et est typiquement inférieure à 20 000 ppm.

Selon une caractéristique de l'invention, l'hydrure de silicium, pur ou dilué, injecté directement dans l'enceinte est typiquement du monosilane ($SiH_4$), du disilane ($Si_2H_6$), ou du trisilane ($Si_3H_8$).

La demanderesse a constaté que, de façon surprenante, de faibles quantités d'hydrure de silicium gazeux introduites dans les enceintes de traitement thermique permettaient d'éliminer très rapidement les impuretés oxydantes résiduelles dans l'atmosphère des enceintes dans une gamme de pressions très vaste et une gamme de températures très large, y compris à basses températures, à partir de 20°C. La rapidité d'action des hydrures rend le procédé particulièrement adapté à la conduite de nombreux traitements thermiques de métaux et permet notamment de contrôler avec précision et sûreté le taux d'impuretés oxydantes à un seuil déterminé selon le type de traitement thermique.

Selon une caractéristique de l'invention, pour l'élimination de traces d'oxygène par injection directe de l'hydrure, pur ou dilué, dans l'enceinte, la température de cette dernière est comprise entre 50 et 1600°C, typiquement entre 150 et 1600°C avec du monosilane et 50 à 700°C avec du disilane. Pour l'élimination de $H_2O$ ou $CO_2$, la température de l'enceinte est comprise entre 400 et 800°C, typiquement entre 450 et 800°C avec du monosilane et entre 400 et 800°C avec du disilane.

De façon plus spécifique, les conditions préférentielles du procédé selon l'invention sont les suivantes :

1. Elimination de traces résiduelles d'oxygène :

    1.1. Avec injection de monosilane, pur ou dilué :
    – la température de l'enceinte est comprise entre 150 et 1600°C;
    – la pression dans l'enceinte est comprise entre $10^{-2}$ Pa et $10^8$ Pa;
    – le rapport R initial entre la teneur de silane injecté et la teneur en oxygène présent dans l'atmosphère de traitement est choisie entre 1,5 et 20 en fonction des conditions de température et de pression et de la géométrie de l'enceinte.

    1.2. Avec injection de disilane, pur ou dilué :

– la température de l'enceinte est comprise entre 50 et 700°C;
– les autres paramètres sont identiques à ceux du paragraphe précédent.

## 2. Elimination de traces résiduelles de vapeur d'eau et/ou de dioxyde de carbone :

2.1. Avec du monosilane pur ou dilué :
– la température de l'enceinte est comprise entre 450 et 800°C;
– la pression dans l'enceinte est comprise entre $10^{-2}$ Pa et $10^8$ Pa;
– le rapport R initial est compris entre 2 et 20.
2.2. Avec du disilane pur ou dilué :
– la température de l'enceinte est comprise entre 400 et 700°C;
– les autres paramètres sont analogues à ceux du paragraphe précédent.

La présente invention sera maintenant décrite en relation avec des modes de réalisation particuliers, en référence avec les dessins annexés, sur lesquels :
– la figure 1 représente de façon schématique un four à tapis pour la métallurgie des poudres;
– la figure 2 est un diagramme montrant l'évolution des températures dans le four de la figure 1;
– la figure 3 est un diagramme illustrant l'évolution du taux résiduel d'oxygène par mise en oeuvre du procédé selon l'invention dans le four de la figure 1;
– la figure 4 est un diagramme illustrant la diminution de la teneur en oxygène résiduel après injection de monosilane dans un four sous vide pour le traitement thermique d'aciers alliés;
– la figure 5 est un diagramme montrant la diminution du point de rosée après injection de silane dans un four cloche pour le recuit de fils d'acier à basse teneur en carbone; et
– la figure 6 est un diagramme montrant la diminution de la teneur en oxygène résiduel après injection de silane au-dessus d'un bain d'aluminiage de tôle.

## Exemple 1 :

Métallurgie des poudres :

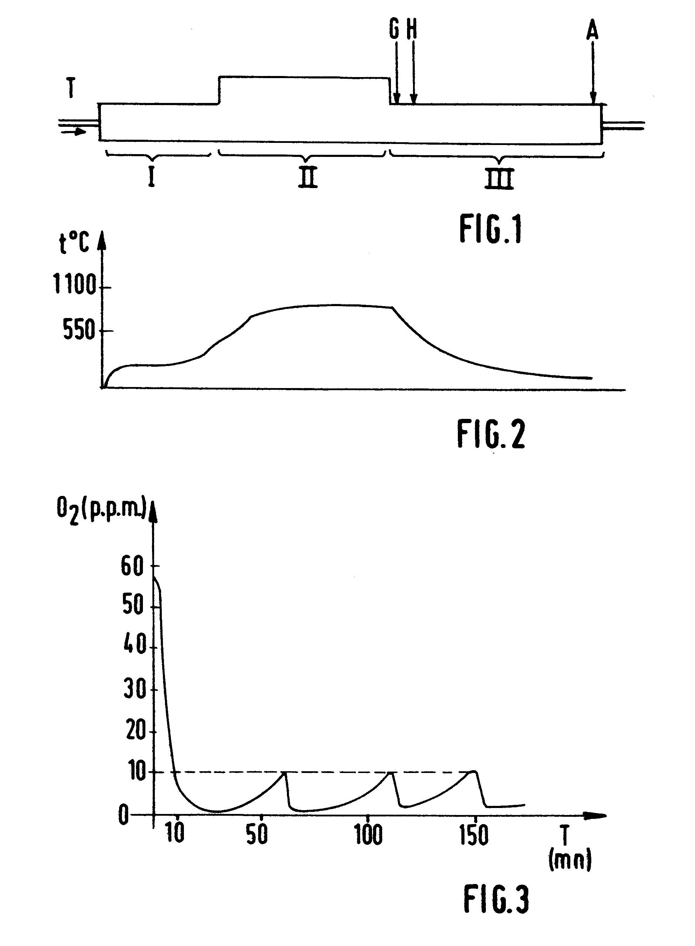

Le four à tapis représenté sur la figure 1 comprend trois zones, successivement une zone de préchauffage I, une zone de chauffe II et une zone de refroidissement III, au travers desquelles les pièces à traiter sont entraînées par un tapis T. La température de la zone de chauffe II est supérieure à 1000°C, et peut atteindre 1120°C pour le frittage des poudres. L'injection principale de l'atmosphère gazeuse de traitement, en l'occurence un mélange d'azote et d'hydrogène, est effectuée en un secteur G, à la fin de la zone de chauffe. Classiquement, malgré un taux d'hydrogène assez important (17 % du flux total de l'atmosphère gazeuse de traitement), on retrouve en fin de la zone de refroidissement III des traces d'espèces oxydantes (vapeur d'eau et oxygène) de l'ordre de 50 à 60 ppm qui suffisent à oxyder les pièces. On a par ailleurs constaté qu'une teneur en oxygène résiduel de 10 ppm demeurait acceptable pour les procédés de traitement concernés.

Selon l'invention, on place en fin de la zone de refroidissement III un analyseur A, permettant d'obtenir en continu une mesure du taux résiduel d'oxygène dans l'atmosphère du four. Cette valeur, comparée au seuil de 10 ppm sus-mentionné, permet d'asservir de façon discontinue l'injection, en un secteur H, en fin de zone de chauffe, de quantités contrôlées de monosilane $SiH_4$. La température dans la zone d'injection de monosilane étant ici de l'ordre de 550°C, on adopte un rapport R moyen silane/impuretés oxydantes avantageusement supérieur à 15, typiquement de 18, ce qui revient à injecter 180 ppm de silane dans l'atmosphère principale pour un seuil maximum d'oxygène résiduel de 10 ppm. Quand l'analyseur détecte un taux d'oxygène supérieur à 10 ppm, le silane est injecté dans l'enceinte. Dès que le taux d'oxygène résiduel détecté devient inférieur à 10 ppm, l'injection de silane est interrompue.

La figure 3 montre l'évolution du taux résiduel d'oxygène dans l'enceinte de la figure 1 en mettant en oeuvre le procédé selon l'invention qui vient d'être décrit.

Dans ce type d'application, la teneur moyenne de l'hydrure injecté dans l'atmosphère de traitement est de l'ordre de 1000 ppm.

## Exemple 2 :

Traitement thermique d'acier dans un four sous vide :

Un cycle complet classique de transformations de pièces en acier type Z5CN17 dure 7 heures, comprenant un pompage dans l'enceinte jusqu'à un vide de $1.10^{-2}$ Pa, suivi d'une montée en température jusqu'à 660°C, puis d'un palier d'homogénéisation. Une nouvelle montée en température jusqu'à 900°C précède un palier d'homogénéisation avant d'injecter un mélange d'azote et d'hydrogène pour réaliser une trempe à une pression absolue d'environ 5 Pa. Il a été constaté qu'un seuil de pollution oxydante, ici l'oxygène, même très faible, de l'ordre de 80 ppm, provenant par exemple du degré peu contrôlable de pollution des bacs contenant les pièces à traiter, suffit à oxyder ces dernières et à détruire une partie de la production.

Pour remédier à ces inconvénients, conformément à l'invention, on injecte dans le four un mélange gazeux azote-hydrogène contenant du monosilane avec un rapport R initial silane/oxygène de l'ordre de 3,8 selon la géométrie du four sous vide, ce qui revient à injecter 295 ppm de silane dans le mélange $N_2/H_2$. On introduit ce mélange à une température comprise entre 300 et 350°C, typiquement de l'ordre de 330°C, dans l'enceinte sous vide puis on suspend la montée en température dans cette dernière durant une période supérieure à 10 minutes, typiquement de 15 minutes, de manière à piéger les impuretés oxydantes, après quoi la montée en température est reprise jusqu'au point d'utilisation, à une température supérieure à 800°C, avec les mêmes paliers d'homogénéisation.

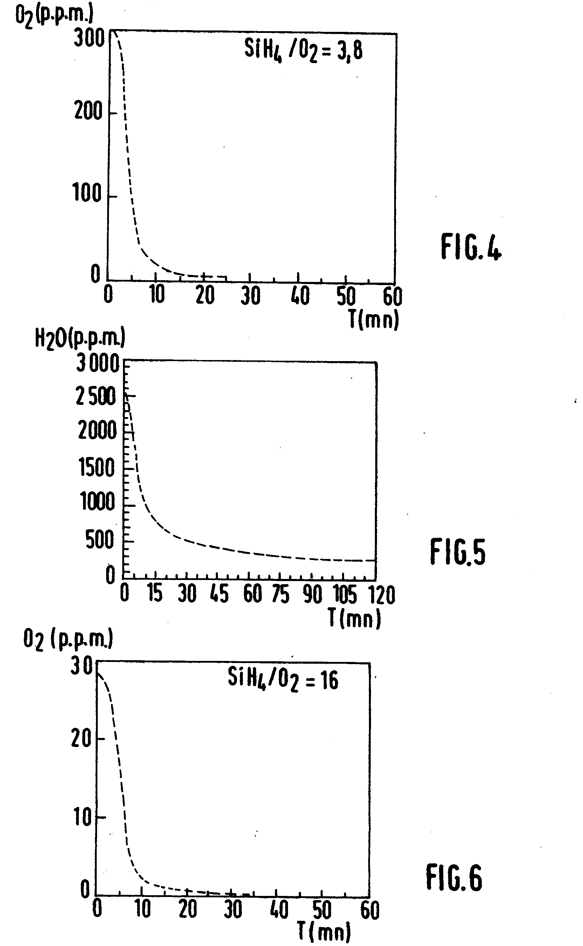

La figure 4 montre que tout risque d'oxydation dans l'enceinte sous vide est ainsi sensiblement annulé.

Dans ce type d'application, la teneur moyenne de l'hydrure injecté dans l'atmosphère de traitement est de l'ordre de 700 ppm.

Exemple 3:

Recuit de fils d'acier dans un four cloche :

Lors du traitement thermique de bobines de fils d'acier à basse teneur en carbone dans un four cloche sous atmosphère contrôlée (mélange d'azote et d'hydrogène avec 5 % d'hydrogène), il apparait des problèmes de décarburation ainsi qu'une oxydation des fils. Ces phénomènes sont dûs à des problèmes d'étanchéité des joints de sable liant la cloche à sa base.

Une analyse d'atmosphère montre qu'en début de cycle, le point de rosée augmente jusqu'à une valeur de l'ordre de 3 000 ppm à 650°C, alors que la teneur en oxygène résiduelle reste inférieure à 10 ppm. En fin de cycle, la teneur résiduelle en eau est de 600 ppm et la teneur en oxygène monte à 100 ppm.

Pour faire chuter le point de rosée, il a été proposé d'injecter de faibles quantités d'hydrocarbures (propane $C_3H_8$) dans l'atmosphère gazeuse, mais les résultats se sont révélés décevants car, à la température du traitement (650°C), l'hydrocarbure n'est pas assez réactif.

Les résultats d'analyse des impuretés oxydantes de l'atmosphère gazeuse montrent que deux rapports différents de R doivent être utilisés à des moments différents. En effet, en début de palier, la vapeur d'eau est l'oxydant à prendre en compte car la teneur en oxygène est négligeable et on cherche à éviter la décarburation par $H_2O$. Le rapport R est choisi pour la valeur maximum de vapeur d'eau à éliminer. Compte tenu de la cinétique de réaction et du volume de l'enceinte, une valeur de 3 a été retenue, ce qui correspond à 9 000 ppm de silane dans l'enceinte. En fin de cycle, l'oxygène est l'oxydant à prendre en compte car on cherche ici à éviter l'oxydation des fils. La teneur en vapeur d'eau étant stabilisée à 300 ppm, comme on le voit sur la figure 5, on a un rapport

$H_2/H_2O$ supérieur à 10, ce qui exclut une oxydation par cette impureté. Compte tenu de la cinétique de réaction et du volume de l'enceinte, un rapport R de 5 est alors retenu pour éliminer les 100 ppm d'oxygène en fin de cycle, ce qui correspond à une injection de 500 ppm de silane dans l'enceinte durant le refroidissement.

La figure 5 illustre la chute du point de rosée, à la pression atmosphérique lors de la première injection de silane durant la montée en température : le point de rosée chute d'une valeur de 2600 ppm à une valeur inférieure à 300 ppm au bout de 2 heures. Cette valeur reste ensuite stationnaire durant le palier, puis lors du refroidissement. Par ailleurs, on ne constate pas de remontée de la teneur en oxygène en fin de cycle.

Dans ce type d'application, la teneur moyenne de l'hydrure dans l'atmosphère contrôlée est de l'ordre de 20 000 ppm.

Exemple 4 :

Aluminisation de tôles en continu :

Lors du dépôt d'aluminium sur une tôle en acier par trempage dans un bain d'aluminium, il est indispensable d'obtenir une atmosphère non oxydante dans la cloche au-dessus du bain. Si cette atmosphère contient quelques ppm d'oxygène, il se forme à la surface du bain une fine pellicule d'alumine qui risque d'être entraînée par la tôle d'acier, empêchant ainsi le mouillage de cette dernière par l'aluminium liquide.

Selon l'invention, on injecte dans la cloche au-dessus du bain d'aluminium du monosilane de façon à obtenir une valeur résiduelle en oxygène inférieure à 3 ppm dans l'atmosphère inerte d'azote de la cloche. Compte tenu de la géométrie du bain, on choisit un rapport R initial silane/impuretés oxydantes supérieur à 10, typiquement d'environ 16, l'injection de silane étant réalisée en plusieurs endroits au-dessus du bain d'aluminium.

La figure 6 montre l'effet de ces injections de silane sur la valeur résiduelle de l'oxygène dans l'atmosphère inerte de la cloche, à la pression atmosphérique et à une température de 600°C (température moyenne dans la cloche).

Dans ce type d'application, la teneur moyenne de l'hydrure injecté dans l'atmosphère est de l'ordre de 500 ppm.

**Revendications**

1. Procédé d'élaboration d'une atmosphère contrôlée sensiblement exempte de gaz oxydant résiduel pour le traitement thermique de métaux dans au moins une enceinte de traitement, l'atmosphère étant constituée essentiellement de gaz neutres ou réducteurs, purs ou en mélange, caractérisé en ce qu'on injecte dans l'enceinte un hydrure de silicium à l'état gazeux à une teneur telle que le rapport R de la teneur en hydrure de silicium injecté à la teneur des gaz oxydants à éliminer est compris entre 1,5 et 20.

2. Procédé selon la revendication 1, caractérisé en ce que l'hydrure de silicium est injecté dans l'enceinte à une teneur telle que R est compris entre 2 et 20.

3. Procédé selon l'une des revendications 1 ou 2, caractérisé en ce que, pour l'élimination de traces d'oxygène dans l'atmosphère gazeuse, la température de l'enceinte est comprise entre 50 et 1100°C.

4. Procédé selon l'une des revendications 1 ou 2, caractérisé en ce que, pour l'élimination de traces de vapeur d'eau et de dioxyde de carbone, la température de l'enceinte est comprise entre 400 et 800°C.

5. Procédé selon la revendication 3, caractérisé en ce que l'hydrure est du monosilane et la température de l'enceinte est comprise entre 150 et 1100°C.

6. Procédé selon la revendication 4, caractérisé en ce que l'hydrure est du monosilane et la température de l'enceinte est comprise entre 450 et 800°C.

7. Procédé selon la revendication 3, caractérisé en ce que l'hydrure est du disilane et la température de l'enceinte est comprise entre 50 et 750°C.

8. Procédé selon la revendication 4, caractérisé en ce que l'hydrure est du disilane et la température de l'enceinte est comprise entre 400 et 800°C.

9. Procédé selon la revendication 1, pour le traitement thermique d'acier dans un four sous vide, caractérisé en ce qu'on introduit du silane à une teneur avec R d'environ 3,8 dans le four à une température entre 300 et 350°C, puis, après une période supérieure à 10 minutes, la température du four est augmentée par paliers jusqu'à une température supérieure à 800°C.

10. Procédé selon la revendication 1, pour le traitement de poudres métalliques dans un four comprenant une zone de chauffe à une température supérieure à 1000°C et une zone de refroidissement, caractérisé en ce qu'on introduit du silane à une teneur avec R supérieure à 15 dans une partie du four en amont de la zone de refroidissement à une température supérieure à 500°C.

11. Procédé selon la revendication 10, caractérisé en ce qu'on mesure en continu le taux résiduel d'oxygène dans la zone de refroidissement et en ce qu'on introduit sélectivement du silane dans le four lorsque ce taux résiduel mesuré est supérieur à une valeur déterminée.

12. Procédé selon la revendication 1, pour le recuit d'aciers à basse teneur en carbone dans un four cloche, caractérisé en ce qu'on effectue une première injection de silane à une teneur avec un premier facteur R supérieur à 5 lors de la montée en température, à une température inférieure à 630°C, puis au moins une deuxième injection de silane avec un deuxième facteur R réduit lors du refroidissement.

FIG.1

FIG.2

FIG.3

FIG.4

FIG.5

FIG.6

**EP 0 481 839 A1**

### RAPPORT DE RECHERCHE EUROPEENNE

Office européen des brevets

Numero de la demande

EP 91 40 2622

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | DE-A-3 511 919 (OLYMPUS)<br>--- | | C 21 D 1/76 |
| A | GB-A- 770 906 (THE GENERAL ELECTRIC CY)<br>----- | | |

**DOMAINES TECHNIQUES RECHERCHES (Int. Cl.5)**

B 01 J
C 21 D

Le présent rapport a été établi pour toutes les revendications

| Lieu de la recherche | Date d'achèvement de la recherche | Examinateur |
|---|---|---|
| LA HAYE | 06-11-1991 | COULOMB J.C. |

**CATEGORIE DES DOCUMENTS CITES**

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant